# EUROPÄISCHE PATENTANMELDUNG

(11) **EP 3 929 448 A1**
(43) Veröffentlichungstag der Anmeldung: **29.12.2021**
(21) Anmeldenummer: 21178790.8
(22) Anmeldetag: 10.06.2021
(51) Int. Cl.: F04D 27/00, F24F 11/72

(54) **VERFAHREN UND VORRICHTUNG ZUR EINSTELLUNG EINES VENTILATORSYSTEMS**

(30) Priorität: 26.06.2020 DE 102020116919
(71) Anmelder: ebm-papst Mulfingen GmbH & Co. KG, 74673 Mulfingen (DE)
(72) Erfinder: Fielsch, Sven, 42369 Wuppertal (DE)
(74) Vertreter: Rüger Abel Patentanwälte PartGmbB

(57) **Zusammenfassung**

Die Erfindung betrifft ein Verfahren und eine Vorrichtung (15) zur Einstellung eines Ventilatorsystems (10). Das Ventilatorsystem (10) weist eine zentrale Ventilatoreinheit (11) und eine damit strömungsverbundene Strömungskanalanordnung (12) auf. Die zentrale Ventilatoreinheit (11) hat eine Steuerung (18), die eine Kommunikationsverbindung (23) mit einem mobilen Endgerät (21) herstellen kann. Zu einem Startzeitpunkt (t₁) wird ein Einstellungsablauf (E) gestartet, bei dem ein Betriebsparameter (p) gemäß einem vorgegebenen Zeitablauf verändert wird. An einer Messstelle (25) der Strömungskanalanordnung (12) entfernt von der zentralen Ventilatoreinheit (11) wird ein Strömungsistwert, beispielsweise ein Volumenstromistwert (Qᵢₛₜ) gemessen. Während der Messung besteht keine Kommunikationsverbindung (23) zwischen dem mobilen Endgerät (21) und der zentralen Ventilatoreinheit (11). Der gemessene Strömungsistwert wird auf das Erfüllen einer Prüfbedingung geprüft und einen Erfüllungszeitpunkt (t₂) wird im mobilen Endgerät (21) gespeichert, zu dem die Prüfbedingung erfüllt wurde. Im Anschluss daran kann die Kommunikationsverbindung (23) zwischen dem mobilen Endgerät (21) und der Steuerung (18) wieder etabliert werden und anhand des Erfüllungszeitpunkts (t₂) und des bekannten Einstellungsablaufs (E) eine Einstellung für den Betriebsparameter (p) ermittelt werden, der die Prüfbedingung an der Messstelle (25) erfüllt.

## Beschreibung

Die Erfindung betrifft ein Verfahren zur Einstellung bzw. Konfiguration eines Ventilatorsystems. Das Ventilatorsystem hat eine zentrale Ventilatoreinheit. Eine Strömungskanalanordnung aufweisend wenigstens einen Strömungskanal ist mit der Ventilatoreinheit strömungsverbunden.

Solche Ventilatorsysteme können beispielsweise in einem Gebäude als Zuluftsystem und/oder als Abluftsystem installiert sein. Die Strömungskanalanordnung kann dabei Strömungen an Orten erzeugen, die von der zentralen Ventilatoreinheit weit entfernt sind. Die Strömung soll an allen Stellen in und an der Strömungskanalanordnung Vorgaben entsprechen. Beispielsweise kann es erforderlich sein, dass ein Volumenstrom an Ansaugöffnungen oder Auslassöffnungen der Strömungskanalanordnung überall zumindest einem unteren Schwellenwert entspricht.

Aufgrund der räumlichen Distanz zwischen der zentralen Ventilatoreinheit und Bestandteilen der Strömungskanalanordnung, insbesondere Ansaugöffnungen oder Auslassöffnungen, ist die Einstellung bzw. Inbetriebnahme des Ventilatorsystems häufig sehr aufwendig. Während an entfernten Installationsorten der Strömungskanalanordnung gemessen wird, ist oft kein unmittelbarer Zugang zu der zentralen Ventilatoreinheit möglich. Häufig werden mehrere Personen benötigt, die miteinander kommunizieren, beispielsweise telefonisch, so dass eine Person die Einstellungen an der zentralen Ventilatoreinheit vornehmen kann, während wenigstens eine weitere Person an einem davon entfernten Ort Messungen der Strömung vornimmt. Ein solches Verfahren ist allerdings sehr aufwendig.

DE 10 2015 012 462 B3 beschreibt ein Verfahren und eine Vorrichtung zum sensorlosen Regeln eines Ventilators. Dabei soll auf die Verwendung eines Drucksensors und eines Volumenstromsensors verzichtet werden. Der Motor wird mit einem vorgegebenen Arbeitspunkt für eine Motorregelgröße betrieben. Die Motorregelgröße wird detektiert, um festzustellen, ob eine Abweichung von einem Sollwert vorliegt. Ist dies der Fall, wird das System mit einem anderen Arbeitspunkt betrieben. Die Arbeitspunkte werden dabei iterativ geändert, bis die Abweichung zwischen Sollwert und Istwert für die Motorregelgröße ausreichend klein ist.

WO 2016/066474 A1 offenbart ein Verfahren zum Kalibrieren einer Fluidpumpenanordnung für ein Fahrzeug. Dabei wird ein zu einem Pumpenstrom eines Pumpenmotors zugehöriger Volumenstrom ermittelt sowohl während einer Phase mit steigendem, als auch während einer Phase mit fallendem Fluiddruck. Die ermittelten Werte können anschließend für eine Steuerung verwendet werden.

Aus WO 99/40325 A1 ist ein Verfahren und eine Vorrichtung zum Regeln einer Fördergröße bekannt. Eine Vielzahl von Parameterkombinationen bestehend aus Druck, Motordrehzahl eines Verdichteraggregats und Volumenstrom werden ermittelt und abgespeichert. Durch Erfassen der Istwerte für den Druck und die Motordrehzahl kann der Volumenstrom daraufhin indirekt ermittelt werden.

Die Aufgabe der vorliegenden Erfindung ist es, ein einfaches Verfahren und eine einfache Vorrichtung zur Einstellung eines Ventilatorsystems bereitzustellen.

Diese Aufgabe wird durch ein Verfahren mit den Merkmalen des Patentanspruches 1 sowie eine Vorrichtung mit den Merkmalen des Patentanspruches 16 gelöst.

Bei dem erfindungsgemäßen Verfahren und der erfindungsgemäßen Vorrichtung wird ein Ventilatorsystem zum Beispiel im Rahmen der Installation bzw. Inbetriebnahme eingestellt. Mittels der Erfindung ist auch möglich, das Ventilatorsystem auch nach der Inbetriebnahme zu einem beliebigen Zeitpunkt neu einzustellen, beispielsweise nach baulichen Änderungen oder wenn es aufgrund von alterungsbedingten Effekten vorteilhaft ist. Das Ventilatorsystem weist eine zentrale Ventilatoreinheit auf, die mit einer Strömungskanalanordnung strömungsverbunden ist. Die zentrale Ventilatoreinheit verursacht eine Strömung, insbesondere eine Luftströmung, in der Strömungskanalanordnung. Vorzugsweise ist ausschließlich die zentrale Ventilatoreinheit zur Verursachung der Strömung in der Strömungskanalanordnung vorhanden.

Zur Einstellung des Ventilatorsystems werden außerdem ein Sensor zur Messung eines Strömungsistwerts sowie ein mobiles Endgerät verwendet. Das mobile Endgerät kann mit dem Sensor und/oder mit der zentralen Ventilatoreinheit eine Kommunikationsverbindung herstellen. Die Kommunikationsverbindung kann jeweils unidirektional vom Sensor zum mobilen Endgerät bzw. vom mobilen Endgerät zur zentralen Ventilatoreinheit oder bidirektional sein. Zur Einstellung des Ventilatorsystems bzw. der zentralen Ventilatoreinheit wird wie folgt vorgegangen:

Zunächst wird eine Kommunikationsverbindung zwischen einer Steuerung der zentralen Ventilatoreinheit und dem mobilen Endgerät hergestellt. Die Steuerung und das mobile Endgerät haben geeignete Schnittstellen für die Herstellung der Kommunikationsverbindung. Vorzugsweise handelt es sich um eine drahtlose Kommunikationsverbindung, die alternativ auch drahtgebunden sein kann. Bei einem Ausführungsbeispiel wird eine drahtlose lokale Kommunikationsverbindung mit insbesondere begrenzter mittlerer Reichweite hergestellt, die auf einem standardisierten Kommunikationsprotokoll basieren kann, beispielsweise Bluetooth, Bluetooth Low Energy oder Wi-Fi. Die maximale Reichweite kann beispielsweise etwa 1m oder 10m oder 100m betragen.

Nachdem die Kommunikationsverbindung zwischen dem mobilen Endgerät und der Steuerung der zentralen Ventilatoreinheit aufgebaut ist, wird ein Einstellungsablauf in der Steuerung der zentralen Ventilatoreinheit gestartet, insbesondere durch einen Befehl, der vom mobilen Endgerät an die Steuerung übermittelt werden kann. Der Zeitpunkt, zu dem der Einstellungsablauf gestartet wird, kann als Startzeitpunkt bezeichnet werden. Der Startzeitpunkt ist sowohl dem mobilen Endgerät, als auch der Steuerung bekannt. Insoweit sind das mobile Endgerät und die Steuerung relativ zum Startzeitpunkt zeitlich synchronisiert.

Der Einstellungsablauf, der durch die Steuerung gestartet wird, veranlasst die zentrale Ventilatoreinheit, einen einstellbaren Betriebsparameter, beispielsweise eine Druckerhöhung oder eine Drehzahl eines Rotors der zentralen Ventilatoreinheit zu ändern. Die Änderung des Betriebsparameters erfolgt vorzugsweise stufenweise. Zusätzlich oder alternativ kann der Betriebsparameter zumindest während Zeitabschnitten auch kontinuierlich geändert werden.

Nachdem der Einstellungsablauf gestartet wurde, wird die Kommunikationsverbindung zwischen der Steuerung und dem mobilen Endgerät getrennt. Das Trennen kann aktiv durch Eingabe eines Befehls in die Steuerung oder das mobile Endgerät erfolgen oder durch Unterbrechen einer drahtgebundenen Verbindung oder durch Entfernen des mobilen Endgeräts aus dem Bereich maximaler Reichweite im Falle einer drahtlosen Kommunikationsverbindung.

Das mobile Endgerät wird dann an einen Ort gebracht, der von der zentralen Ventilatoreinheit entfernt ist. Im Bereich dieses Ortes befindet sich eine Messstelle in oder an der Strömungskanalanordnung. Von diesem Ort aus kann insbesondere keine Kommunikationsverbindung vom mobilen Endgerät zur Steuerung der zentralen Ventilatoreinheit hergestellt werden, zumindest ist dies keine Voraussetzung für die erfindungsgemäße Einstellung.

An der Messstelle wird ein Sensor angeordnet, um einen Strömungsistwert einer Strömung zu messen. Der Sensor ist vorzugsweise ein mobiler Sensor, der lediglich zeitweise an der Messstelle zur Messung des Strömungsistwertes angeordnet wird. Vorzugsweise besteht keine Kommunikationsverbindung zwischen dem Sensor und der Steuerung, insbesondere nicht zur Übermittlung des vom Sensor gemessenen Strömungsistwertes an die Steuerung. Während des späteren Betriebs des Ventilatorsystems im Anschluss an dessen Einstellung wird der Sensor nicht zur sensorbasierten Regelung verwendet. Der Strömungsistwert kann beispielsweise ein Volumenstromistwert oder ein Strömungsgeschwindigkeitsistwert sein. Der gemessene Strömungsistwert kann vom Sensor an das mobile Endgerät übermittelt werden, beispielsweise mittels einer drahtgebundenen oder drahtlosen Kommunikationsverbindung. Die Kommunikationsverbindung zwischen dem mobilen Endgerät und dem Sensor kann auf dem gleichen Kommunikationsprotokoll basieren, wie die Kommunikationsverbindung zwischen dem mobilen Endgerät und der Steuerung der zentralen Ventilatoreinheit.

Im mobilen Endgerät kann dann geprüft werden, ob der empfangene Strömungsistwert eine vorgegebene Prüfbedingung erfüllt. Dazu kann der Strömungsistwert beispielsweise mit einem Strömungssollwert verglichen werden. Der Strömungsistwert kann alternativ mit einem unteren Schwellenwert, den der Strömungsistwert mindestens erreichen muss, und/oder mit einem oberen Schwellenwert, den der Strömungsistwert nicht überschreiten darf, verglichen werden.

Eine Kommunikationsverbindung zwischen dem Sensor und dem mobilen Endgerät ist aber nicht zwingend erforderlich. Alternativ dazu kann auch eine Bedienperson manuell eine Bestätigungseingabe in das mobile Endgerät vornehmen, wenn der Sensor den korrekten Strömungsistwert anzeigt.

Sobald die Prüfbedingung erfüllt ist oder sobald die Bedienperson die Bestätigungseingabe in das mobile Endgerät ausführt, speichert das mobile Endgerät den Zeitpunkt ab, zu dem die Prüfbedingung erfüllt wurde. Dieser Zeitpunkt wird als Erfüllungszeitpunkt bezeichnet. Anhand des bekannten Einstellungsablaufs ausgehend vom Startzeitpunkt kann basierend auf dem Erfüllungszeitpunkt ermittelt werden, welchen Wert bzw. Betrag der Betriebsparameter zum Erfüllungszeitpunkt hatte. Dieser Wert des einstellbaren Betriebsparameters kann im Anschluss in der Steuerung der zentralen Ventilatoreinheit abgespeichert werden. Zum Ermitteln und Einstellen des Betriebsparameters in der Steuerung kann die Kommunikationsverbindung zwischen dem mobilen Endgerät und der Steuerung wieder hergestellt werden.

Nach dem Ermitteln des Erfüllungszeitpunktes kann der Sensor von der Messstelle entfernt werden. Er ist für den weiteren Einstellungsablauf nicht mehr erforderlich.

Dieses Verfahren kann durch eine einzige Person durchgeführt werden. Der bekannte Einstellungsablauf wird in der zentralen Ventilatoreinheit durchgeführt, so dass der Betriebsparameter vorzugsweise wiederholt mehrere mögliche Werte annimmt. Da das mobile Endgerät und die Steuerung zeitlich ausreichend genau synchronisiert sind, genügt es an der Messstelle festzustellen, zu welchem Zeitpunkt die Prüfbedingung erfüllt oder die Bestätigungseingabe ausgeführt wurde (Erfüllungszeitpunkt). Dieser Zeitpunkt definiert ausgehend vom Startzeitpunkt den Wert des einstellbaren Betriebsparameters, der anschließend eingestellt bzw. programmiert werden kann. Es ist daher nicht notwendig, während der Messung eine Kommunikationsverbindung zwischen dem mobilen Endgerät und der Steuerung aufrecht zu erhalten. Auf teure und komplexe Kommunikationsmittel, beispielsweise zum Herstellen einer Mobilfunkkommunikation zwischen dem mobilen Endgerät und der Steuerung, kann verzichtet werden. Bei Ventilatorsystemen, bei denen der Betriebsparameter konstant eingestellt werden soll, kann auch auf eine aufwendige sensorbasierte Regelung verzichtet werden. Gegebenenfalls kann die Einstellung von Zeit zu Zeit durchgeführt werden, um Veränderungen im Ventilatorsystem zu berücksichtigen, die sich beispielsweise durch einen Verschleiß, alterungsbedingte Effekte oder nach baulichen Veränderungen ergeben können.

Vorzugsweise befindet sich die Messstelle außerhalb der Kommunikationsreichweite der Kommunikationsverbindung zwischen dem mobilen Endgerät und der Steuerung, so dass während der Messung mit dem Sensor keine Kommunikationsverbindung zwischen dem mobilen Endgerät und der Steuerung möglich ist.

Es ist bevorzugt, wenn sich die Messstelle an einer Position der Strömungskanalanordnung befindet, an der der zu messende Strömungsistwert, beispielsweise der Volumenstromistwert, ein Minimum aufweist. Dadurch kann sichergestellt werden, dass der Strömungsistwert an allen anderen Stellen der Strömungskanalanordnung ausreichend groß ist.

Bei einem Ausführungsbeispiel wird als Messstelle eine Position in oder an der Strömungskanalanordnung gewählt, die am weitesten von der zentralen Ventilatoreinheit entfernt ist. Weist die Strömungskanalanordnung zum Beispiel mehrere Strömungskanalöffnungen auf, durch die Luft ausströmt oder durch die Luft angesaugt wird, kann die am weitesten von der zentralen Ventilatoreinheit angeordnete Strömungskanalöffnung als Messstelle verwendet werden.

Es ist vorteilhaft, wenn der Einstellungsablauf dazu eingerichtet ist, den Betriebsparameter sequentiell zu erhöhen oder zu verringern. Die Sequenz kann solange wiederholt werden, bis der Einstellungsablauf durch eine Bedieneingabe an der Steuerung und/oder am mobilen Endgerät abgebrochen wird. Der Abbruch des Einstellungsablaufs kann beispielsweise dann erfolgen, wenn nach dem Starten des Einstellungsablaufs erneut eine Kommunikationsverbindung zwischen der Steuerung und dem mobilen Endgerät hergestellt wird.

Es ist bevorzugt, wenn der Einstellungsablauf mehrere unterschiedliche Betriebsparameterwerte für den Betriebsparameter definiert, die sequentiell während des Einstellungsablaufs eingestellt werden. Dabei kann jeder eingestellte Betriebsparameterwert während einer vorgegebenen Dauer aufrechterhalten werden. Die Dauer ist vorzugsweise mindestens so groß, dass sich die Änderung des Betriebsparameters durch die zentrale Ventilatoreinheit an der Messstelle auswirkt und an der Messstelle insbesondere ein stationärer Zustand der Strömung erreicht wird. Abhängig von der Länge und dem räumlichen Verlauf der Strömungskanalanordnung kann eine Zeitverzögerung zwischen der Änderung des Betriebsparameters durch die Steuerung und der Änderung des Strömungsistwertes an der Messstelle auftreten. Wenn die Dauer, während der jeder Betriebsparameterwert während des Einstellungsablaufs unverändert aufrechterhalten wird, ausreichend lang ist, kann sich an der Messstelle ein Strömungsistwert einstellen, der dem aktuellen Betriebsparameterwert der zentralen Ventilatoreinheit entspricht, so dass die Messung an der Messstelle eindeutig einem der Betriebsparameterwerte zugeordnet werden kann.

Alternativ dazu kann die Dauer auch kürzer gewählt werden, sofern die Zeitverzögerung zwischen der Änderung des Betriebsparameters durch die Steuerung und der Änderung des Strömungsistwertes an der Messstelle bekannt ist, die beispielsweise durch eine Simulation oder empirisch ermittelt werden kann.

Eine Differenz zwischen zwei unmittelbar benachbarten durch den Einstellungsablauf definierten Betriebsparameterwerten kann als Änderungsstufe bezeichnet werden. Alle Änderungsstufen können bei einem Ausführungsbeispiel gleich groß sein. Bei anderen Ausführungsbeispielen können die Änderungsstufen unterschiedlich groß sein.

Beispielsweise kann es vorteilhaft sein, die Änderungsstufen abhängig von einer Ventilatorkennlinie der zentralen Ventilatoreinheit einzustellen. Vorzugsweise kann die Einstellung der Änderungsstufen derart erfolgen, dass sich durch jede Änderungsstufe der Strömungsistwert um einen vorgegebenen Strömungsdifferenzbetrag ändert. Dadurch kann erreicht werden, dass sich der an der Messstelle gemessene Strömungsistwert in ungefähr konstanten Stufen ändert, die dem Strömungsdifferenzbetrag entsprechen. Der Strömungsdifferenzbetrag kann beispielsweise abhängig von einer zulässigen Toleranz eines Strömungssollwerts gewählt werden.

Vorteilhafte Ausgestaltungen des erfindungsgemäßen Verfahrens bzw. der erfindungsgemäßen Vorrichtung ergeben sich aus den abhängigen Patentansprüchen, der Beschreibung und den Zeichnungen. Nachfolgend werden bevorzugte Ausführungsformen der Erfindung anhand der beigefügten Zeichnungen im Einzelnen erläutert. In den Zeichnungen zeigen:
Figuren 1 und 2 jeweils eine stark schematisierte, blockschaltbildähnliche Darstellung eines Ventilatorsystems und eines mobilen Endgeräts während der Einstellung des Ventilatorsystems,
Figuren 3-5 unterschiedliche Ausführungsbeispiele für vorgegebene Einstellungsabläufe, die die zeitliche Veränderung eines einstellbaren Betriebsparameters beschreiben,
Figur 6 ein Flussdiagramm eines Ausführungsbeispiels eines Verfahrens zur Einstellung des Ventilatorsystems aus den Figuren 1 und 2 und
Figur 7 ein Flussdiagramm eines Ausführungsbeispiels einer Verfahrensroutine für das Ermitteln des Betriebsparameters basierend auf der Messung eines Strömungsistwerts.

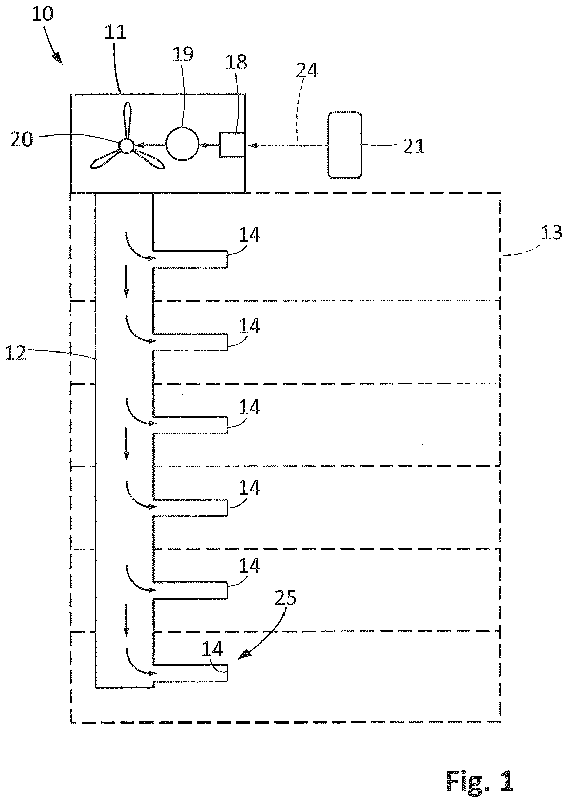

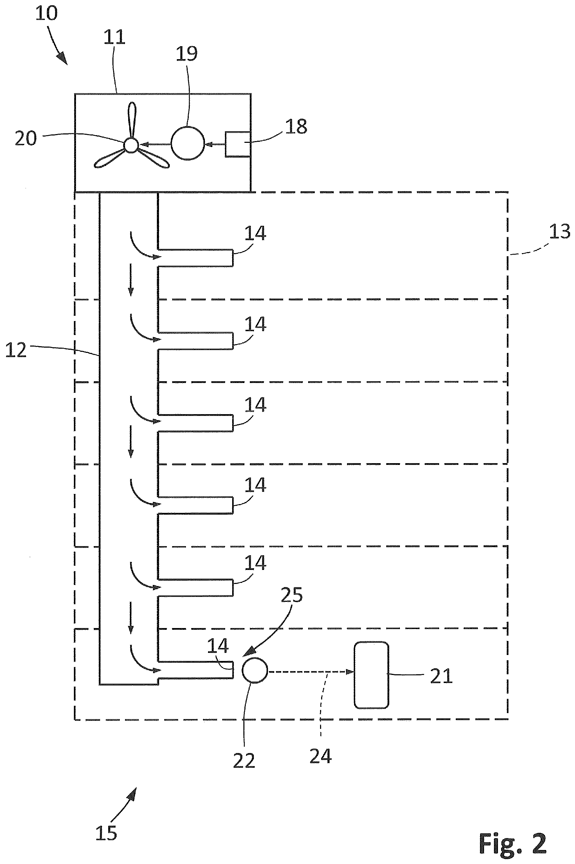

In den Figuren 1 und 2 ist stark schematisiert ein Ventilatorsystem 10 dargestellt. Das Ventilatorsystem 10 hat eine zentrale Ventilatoreinheit 11, die zur Erzeugung einer Strömung und beispielsgemäß einer Luftströmung in einer Strömungskanalanordnung 12 eingerichtet ist. Die Strömungskanalanordnung 12 ist mit der zentralen Ventilatoreinheit 11 strömungsverbunden. Vorzugsweise sind an die Strömungskanalanordnung 12 keine weiteren strömungserzeugenden Einrichtungen angeschlossen.

Das Ventilatorsystem 10 kann beispielsweise in einem Gebäude 13 installiert sein. Das Ventilatorsystem 10 kann beispielsweise als Zuluftsystem zum Zuführen von Luft oder alternativ als Abluftsystem zum Absaugen von Luft aus bestimmten Bereichen des Gebäudes 13 eingerichtet sein. Lediglich beispielhaft ist das Ventilatorsystem 10 in den Figuren 1 und 2 als Zuluftsystem veranschaulicht. Die Strömungskanalanordnung 12 hat mehrere Strömungsöffnungen 14 an unterschiedlichen Orten im Gebäude 13, um Luft aus den Strömungsöffnungen 14 abzugeben. Die Strömungsöffnungen 14 können dabei unterschiedliche Abstände von der zentralen Ventilatoreinheit 11 aufweisen.

Die zentrale Ventilatoreinheit 11 hat eine Steuerung 18 zur Ansteuerung eines Antriebs 19, beispielsweise wenigstens eines Elektromotors. Mittels des Antriebs 19 wird wenigstens ein Rotor 20 der zentralen Ventilatoreinheit 11 drehend angetrieben, um die Strömung in der Strömungskanalanordnung 12 zu erzeugen.

Zur Einstellung des Ventilatorsystems 10 dient eine Vorrichtung 20, die zusätzlich zu dem Ventilatorsystem 10 außerdem ein mobiles Endgerät 21 sowie einen Sensor 22 aufweist. Der Sensor 22 kann ebenfalls als mobiler Sensor ausgebildet sein und ist beim Ausführungsbeispiel nicht ortsfest am Ventilatorsystem 10 installiert. Der Sensor 22 kann alternativ zu der veranschaulichten Ausführungsform auch Bestandteil des mobilen Endgeräts 21 sein.

Zwischen dem Sensor 22 und dem mobilen Endgerät 21 kann eine Kommunikationsverbindung 24 hergestellt werden, um einen vom Sensor 22 gemessenen Strömungsistwert an das mobile Endgerät 21 zu übermitteln. Die Kommunikationsverbindung 24 muss daher zumindest unidirektional vom Sensor 22 zum mobilen Endgerät 21 sein. Die Kommunikationsverbindung 24 kann auch bidirektional sein. Die Kommunikationsverbindung 24 kann drahtgebunden oder drahtlos sein und analog zur Kommunikationsverbindung 23 zwischen dem mobilen Endgerät 21 und der Steuerung 18 aufgebaut werden.

Das mobile Endgerät 21 und die Steuerung 18 der zentralen Ventilatoreinheit 11 sind dazu eingerichtet, eine Kommunikationsverbindung 23 herzustellen. Die Kommunikationsverbindung 23 kann unidirektional vom Endgerät 21 zur Steuerung 18 oder alternativ bidirektional ausgebildet sein. Die Kommunikationsverbindung 23 kann drahtgebunden oder drahtlos hergestellt werden. Beim Ausführungsbeispiel ist die Kommunikationsverbindung 23 drahtlos als Nahfeldkommunikationsverbindung ausgeführt. Die Kommunikationsverbindung 23 kann beispielsweise auf einem drahtlosen Nahfeldkommunikationsstandard beruhen, wie etwa Bluetooth, Bluetooth Low Energy oder Wi-Fi. Die Reichweite der Kommunikationsverbindung 23 ist begrenzt. Vorzugsweise kann zwischen der Steuerung 18 und dem mobilen Endgerät 21 keine Mobilfunkverbindung mit großer Reichweite hergestellt werden. Dazu ist insbesondere die Steuerung 18 nicht eingerichtet.

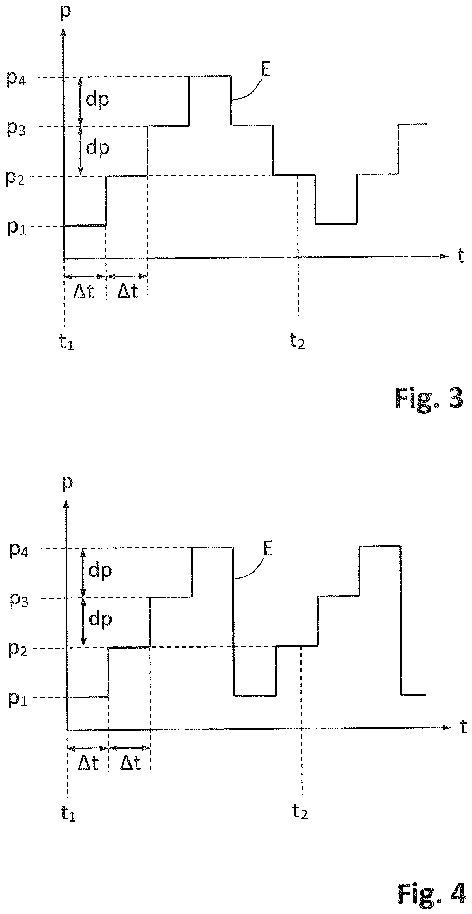

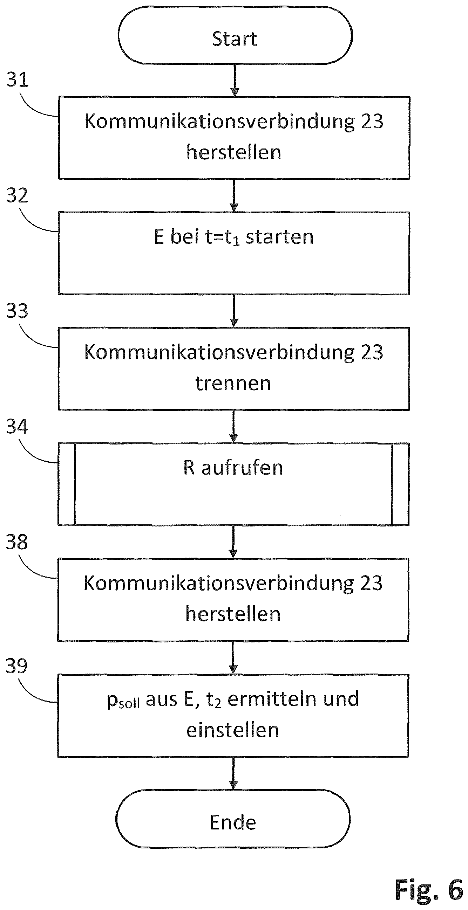

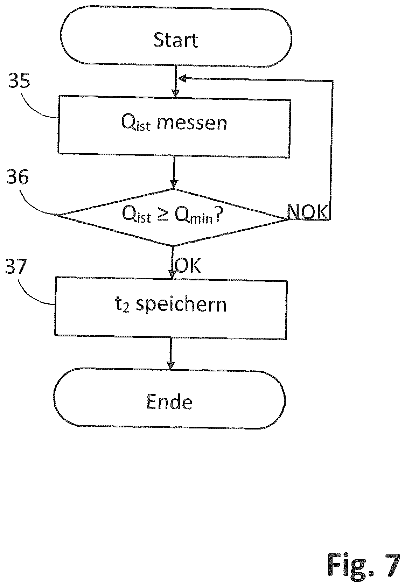

Aufgrund der Erstreckung der Strömungskanalanordnung 12 in unterschiedliche Teile des Gebäudes 13 und wegen der unterschiedlichen Entfernungen der Strömungsöffnungen 14 von der zentralen Ventilatoreinheit 11, sind die Strömungsverhältnisse an den Strömungsöffnungen 14 bzw. an unterschiedlichen Stellen der Strömungskanalanordnung 12 voneinander verschieden. Es ist aber erwünscht, dass die Strömung überall und beispielsweise an sämtlichen Strömungsöffnungen 14 Mindestanforderungen erfüllt. Um dies zu erreichen, wird das Ventilatorsystem 10 nach seiner Installation im Rahmen der Inbetriebnahme konfiguriert, wobei die Steuerung 18, das mobile Endgerät 21 und der Sensor 22 verwendet werden. Dabei wird ein Verfahren zur Einstellung der zentralen Ventilatoreinheit 11 durchgeführt, das anhand der Flussdiagramme gemäß der Figuren 6 und 7 und den Diagrammen der Figuren 3 bis 5 nachfolgend erläutert wird.

In einem ersten Schritt 30 wird das Verfahren zur Einstellung gestartet und anschließend wird die Kommunikationsverbindung 23 zwischen dem Endgerät 21 und der Steuerung 18 in einem Schritt 31 hergestellt. Nachdem die Kommunikationsverbindung 23 hergestellt wurde, wird in einem Schritt 32 ein Einstellungsablauf E in der Steuerung 18 zu einem Startzeitpunkt t₁ gestartet. Das Starten des Einstellungsablaufs E kann durch Eingeben eines Befehls im mobilen Endgerät 21 erfolgen oder automatisch nach dem Herstellen der Kommunikationsverbindung 23 gestartet werden.

In den Figuren 3-5 sind unterschiedliche Beispiele für einen Einstellungsablauf E veranschaulicht. Während des Einstellungsablaufs E wird ein Betriebsparameter p der zentralen Ventilatoreinheit 11 und beispielsgemäß eine Druckerhöhung zeitlich verändert. Eine zeitliche Veränderung des Betriebsparameters p kann sequentiell erfolgen. Eine vorgegebene Sequenz der Änderung des Betriebsparameters p kann zyklisch wiederholt werden.

Wie es in den Figuren 3-5 veranschaulicht ist, wird beispielsgemäß als Betriebsparameter p eine Druckerhöhung abhängig von der Zeit t stufenweise verändert. Alternativ zu den dargestellten Ausführungsbeispielen könnte die Druckerhöhung zumindest zeitweise auch kontinuierlich geändert werden. Anstelle der Druckerhöhung kann als einstellbarer Betriebsparameter p auch ein anderer im Betriebszustand der zentralen Ventilatoreinheit 11 kennzeichnender Betriebsparameter verwendet werden, beispielsweise eine Drehzahl des Rotors 20 und/oder des Antriebs 19 oder irgendeine damit korrelierende kennzeichnende Größe, wie etwa ein Motorstrom, eine Motorstromfrequenz oder eine ähnliche Steuergröße eines Elektromotors des Antriebs 19.

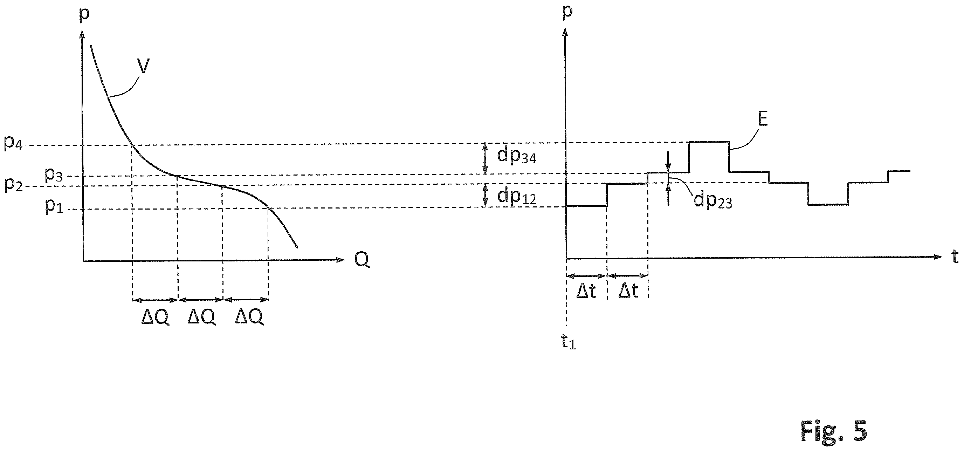

Beim Ausführungsbeispiel definiert der Einstellungsablauf E wiederholt einstellbare bzw. auswählbare Betriebsparameterwerte pᵢ (mit i= 1 bis n). Die Anzahl n der auswählbaren Betriebsparameterwerte pᵢ kann variieren. In den Figuren 3-5 sind der Übersichtlichkeit wegen und lediglich beispielhaft vier unterschiedliche Betriebsparameterwerte p₁, p₂, p₃, p₄ veranschaulicht. Die Differenz, die zwei im Hinblick auf ihren Betrag bzw. ihren Wert unmittelbar benachbarte Betriebsparameter p₁ und p₂ oder p₂ und p₃ oder p₃ und p₄ aufweisen, kann als Änderungsstufe dp bezeichnet werden. Der Betrag der Änderungsstufen dp kann für alle Änderungsstufen dp gleich groß sein (Figuren 3 und 4) oder auch variieren, so dass sich unterschiedlich große Änderungsstufen dp₁₂, dp₂₃, dp₃₄ ergeben (Figur 5) .

Beim Durchlaufen des Einstellungsablaufs E werden die Betriebsparameterwerte p₁, p₂, p₃, p₄ in einer vorgegebenen Reihenfolge durchlaufen und jeweils für eine Dauer Δt aufrechterhalten. Während der Dauer Δt bleibt ein eingestellter Betriebsparameterwert im Wesentlichen konstant. Wie erläutert, kann als Betriebsparameterwert p die Druckerhöhung verwendet werden, so dass die Betriebsparameterwerte p₁, p₂, p₃, p₄ jeweils einen Druckerhöhungswert bilden, den die zentrale Ventilatoreinheit 11 einstellen kann.

Die Dauer Δt, während der ein bestimmter Betriebsparameterwert p₁, p₂, p₃, p₄ bzw. Druckerhöhungswert während des Einstellungsablaufs E unverändert aufrechterhalten bleibt, kann systemabhängig gewählt werden.

Beim Starten des Einstellungsablaufs E im Schritt 32 werden das mobile Endgerät 21 und die Steuerung 18 zeitlich synchronisiert. Der Startzeitpunkt t₁ ist sowohl der Steuerung 18, als auch dem mobilen Endgerät 21 bekannt, so dass ausgehend vom Startzeitpunkt t₁ eine synchrone Zeitmessung erfolgen kann.

Nach dem Starten des Einstellungsablaufs E wird die Kommunikationsverbindung 23 zwischen dem mobilen Endgerät 21 und der Steuerung 18 getrennt (Schritt 33) und anschließend wird im Schritt 34 eine Verfahrensroutine R (Figur 7) aufgerufen.

Das mobile Endgerät 21 wird in die Nähe einer Messstelle 25 bewegt und beim Ausführungsbeispiel dort mit dem Sensor 22 verbunden. An der Messstelle 25 wird ein Strömungsistwert und beispielsgemäß ein Volumenstromistwert Qᵢₛₜ mittels des Sensors erfasst und an das mobile Endgerät 21 übermittelt (Schritt 35 in Figur 7). In einem darauffolgenden Schritt 36 wird geprüft, ob der Strömungsistwert die Prüfbedingung erfüllt und es wird beispielsgemäß geprüft, ob der Volumenstromistwert Qᵢₛₜ gleich oder größer ist als der vorgegebene minimale Volumenstromwert Qₘᵢₙ. Ist dies nicht der Fall (Verzweigung NOK aus dem Schritt 36), wird die Verfahrensroutine R wieder im Schritt 35 fortgesetzt.

Alternativ dazu können auch andere Prüfbedingungen definiert werden. Der Strömungsistwert kann zum Beispiel mit einem Strömungssollwert oder einem Strömungssollwertbereich, verglichen werden. Es kann beispielsweise geprüft werden, ob der Strömungsistwert mit dem Strömungssollwert übereinstimmt oder im Strömungssollwertbereich ist.

Bei einem modifizierten Ausführungsbeispiel wird keine Kommunikationsverbindung zwischen dem mobilen Endgerät 21 und dem Sensor 22 hergestellt. Eine Bedienperson kann den vom Sensor 22 gemessenen Strömungsistwert überwachen und bei Erfüllung einer vorgegebenen Bedingung (insbesondere die Prüfbedingung) eine Bestätigungseingabe in das mobile Endgerät 21 ausführen, z.B. ein kurzes Antippen ("Klick") eine vorhandenen oder auf einem berührungsempfindlichen Bildschirm angezeigten Knopfes.

Das Erfüllen der Prüfbedingung kann also automatisch oder alternativ durch eine Bedienperson ausgeführt werden.

Sobald die Prüfbedingung erfüllt ist - entweder basierend auf einer automatischen Prüfung oder auf der Bestätigungseingabe durch die Bedienperson (Verzweigung OK aus dem Schritt 36), wird im Schritt 37 der Zeitpunkt gespeichert, zu dem die Prüfbedingung erfüllt wurde. Dieser Zeitpunkt stellt einen Erfüllungszeitpunkt t₂ dar.

Damit endet die Verfahrensroutine R und das Verfahren wird anschließend in Schritt 38 (Figur 6) fortgesetzt. Das mobile Endgerät 21 wird von der Messstelle 25 zurück in die Nähe der Ventilatoreinheit 11 gebracht. Dabei kann beispielsgemäß die Kommunikationsverbindung 24 zwischen dem mobilen Endgerät 21 und dem Sensor 22 unterbrochen werden. Eine weitere Messung der Strömungsistgröße an der Messstelle 25 ist nicht erforderlich. Die Kommunikationsverbindung 23 zwischen dem mobilen Endgerät 21 und der Steuerung 18 wird wieder aufgebaut (Schritt 38).

Anhand des Erfüllungszeitpunkts t₂ und des bekannten Einstellungsablaufs E kann dann erkannt werden, welcher der Betriebsparameterwerte p₁, p₂, p₃, p₄ zum Erfüllungszeitpunkt t₂ durch den Einstellungsablauf E eingestellt war, was beispielhaft in den Figuren 3 und 4 veranschaulicht ist. Dort ist lediglich als ein Beispiel gezeigt, dass der Betriebsparameter zum Erfüllungszeitpunkt t₂ einem Betriebsparameterwert p₂ entspricht, der hier einen zweiten Druckerhöhungswert beschreibt. Der auf diese Weise bestimmte Betriebsparameter p kann dann als Vorgabe bzw. Sollwert in der Steuerung 18 abgespeichert und zur Steuerung oder Regelung in der zentralen Ventilatoreinheit 11 verwendet werden.

Die Messstelle 25, an der der Volumenstromistwert Qᵢₛₜ gemessen wird, wird vorzugsweise dort gewählt, wo der Volumenstromistwert Qᵢₛₜ in oder an der Strömungskanalanordnung 12 minimal ist. Beispielsgemäß wird die Messstelle 25 an der Strömungsöffnung 14 gewählt, die in Strömungsrichtung am weitesten von der zentralen Ventilatoreinheit 11 entfernt ist. Durch das Prüfen des Volumenstromistwertes Qᵢₛₜ an der Messstelle 25 wird erreicht, dass der Volumenstrom an jeder Stelle in der Strömungskanalanordnung 12 und an jeder weiteren Strömungsöffnung 14 mindestens so groß ist, wie an der Messstelle 25. Um dies zu erreichen, genügt das Durchführen der Messung des Volumenstromistwertes Qᵢₛₜ an einer einzigen Messstelle 25, um das System zu konfigurieren.

Die Dauer Δt, während der im Einstellungsablauf E einer der Betriebsparameterwerte p₁, p₂, p₃, p₄ aufrechterhalten wird, bevor ein anderer Betriebsparameterwert p₁, p₂, p₃, p₄ eingestellt wird, ist vorzugsweise so gewählt, dass sich eine Änderung des Betriebsparameters p an der zentralen Ventilatoreinheit 11 derart an der Messstelle 25 auswirkt, dass dort im Wesentlichen eine Strömung erreicht wird, die dem ausgewählten Betriebsparameterwert p₁, p₂, p₃, p₄ entspricht. Vorzugsweise stellt sich an der Messstelle 25 eine stationäre Strömung ein, bevor während des Einstellungsablaufs E der Betriebsparameterwert p₁, p₂, p₃, p₄ erneut geändert wird. Dadurch kann sichergestellt werden, dass eine eindeutige Zuordnung des Erfüllungszeitpunkts t₂ zum aktuell eingestellten Betriebsparameterwert p₁, p₂, p₃, p₄ durch eine einfache Zuordnung möglich ist.

In Figur 5 ist lediglich beispielhaft und schematisch eine Ventilatorkennlinie V dargestellt. Anhand der Ventilatorkennlinie V ist zu erkennen, dass zwischen dem Betriebsparameter p und dem Strömungsistwert ein beliebiger nicht linearer Zusammenhang vorliegen kann, beispielsgemäß zwischen der Druckerhöhung und dem Volumenstrom Q. Der Einstellungsablauf E kann unter Berücksichtigung der Ventilatorkennlinie V definiert werden. Beispielsweise können die Änderungsstufen dp₁₂, dp₂₃, dp₃₄ zwischen unmittelbar benachbarten Betriebsparameterwerten p₁ und p₂ oder p₂ und p₃ oder p₃ und p₄ in Abhängigkeit von der Ventilatorkennlinie V definiert werden und dadurch unterschiedliche Beträge aufweisen.

In Figur 5 ist schematisch und beispielhaft dargestellt, dass die Änderungsstufen dp₁₂, dp₂₃, dp₃₄ derart festgelegt werden können, dass sich beim Ändern des Betriebsparameters p während des Einstellungsablaufs E von einem Betriebsparameterwert p₁, p₂, p₃, p₄ zum benachbarten Betriebsparameterwert jeweils eine im Wesentlichen gleich große Änderung des Strömungsistwertes und beispielsgemäß des Volumenstromistwertes Qᵢₛₜ ergibt, die einem Strömungsdifferenzbetrag ΔQ entspricht. Der Strömungsdifferenzbetrag ΔQ kann ausreichend groß definiert werden, so dass die Änderung des Strömungsistwertes vom Sensor 22 erfasst werden kann. Außerdem kann der Strömungsdifferenzbetrag ΔQ so gewählt werden, dass er größer ist als eine vorgegebene Toleranz bei der Messung des Strömungsistwertes und/oder beim Prüfen der Prüfbedingung.

Die Erfindung betrifft ein Verfahren und eine Vorrichtung 15 zur Einstellung eines Ventilatorsystems 10. Das Ventilatorsystem 10 weist eine zentrale Ventilatoreinheit 11 und eine damit strömungsverbundene Strömungskanalanordnung 12 auf. Die zentrale Ventilatoreinheit 11 hat eine Steuerung 18, die eine Kommunikationsverbindung 23 mit einem mobilen Endgerät 21 herstellen kann. Zu einem Startzeitpunkt t₁ wird ein Einstellungsablauf E gestartet, bei dem ein Betriebsparameter p gemäß einem vorgegebenen Zeitablauf verändert wird. An einer Messstelle 25 der Strömungskanalanordnung 12 entfernt von der zentralen Ventilatoreinheit 11 wird ein Strömungsistwert, beispielsweise ein Volumenstromistwert Qᵢₛₜ gemessen und der Messwert kann optional an das mobile Endgerät 21 übertragen werden. Während der Messung besteht jedenfalls keine Kommunikationsverbindung 23 zwischen dem mobilen Endgerät 21 und der zentralen Ventilatoreinheit 11. Das mobile Endgerät 21 kann optional dazu eingerichtet sein, den gemessenen Strömungsistwert auf das Erfüllen einer Prüfbedingung zu prüfen. Das Erfüllen der Prüfbedingung kann alternativ durch eine Bedienperson erfolgen und durch eine Bestätigungseingabe in das mobile Endgerät 21 bestätigt werden. Ein Erfüllungszeitpunkt t₂, zu dem die Prüfbedingung erfüllt wurde, wird mittels des mobilen Endgeräts 21 gespeichert. Im Anschluss daran kann die Kommunikationsverbindung 23 zwischen dem mobilen Endgerät 21 und der Steuerung 18 wieder etabliert werden und anhand des Erfüllungszeitpunkts t₂ und des bekannten Einstellungsablaufs E eine Einstellung für den Betriebsparameter p ermittelt und in der Steuerung 18 eingestellt werden, der die Prüfbedingung an der Messstelle 25 erfüllt.

### Bezugszeichenliste:

- 10: Ventilatorsystem
- 11: zentrale Ventilatoreinheit
- 12: Strömungskanalanordnung
- 13: Gebäude
- 14: Strömungsöffnung
- 15: Vorrichtung

- 18: Steuerung
- 19: Antrieb
- 20: Rotor
- 21: mobiles Endgerät
- 22: Sensor
- 23: Kommunikationsverbindung
- 24: Kommunikationsverbindung
- 25: Messstelle

- 31: Schritt des Verfahrens
- 32: Schritt des Verfahrens
- 33: Schritt des Verfahrens
- 34: Schritt des Verfahrens
- 35: Schritt der Verfahrensroutine
- 36: Schritt der Verfahrensroutine
- 37: Schritt der Verfahrensroutine
- 38: Schritt des Verfahrens
- 39: Schritt des Verfahrens

- Δt: Dauer
- ΔQ: Strömungsdifferenzbetrag

- dp: Änderungsstufe
- dp₁₂: Änderungsstufe zwischen p₁ und p₂
- dp₂₃: Änderungsstufe zwischen p₂ und p₃
- dp₃₄: Änderungsstufe zwischen p₃ und p₄
- E: Einstellungsablaufs
- p: Betriebsparameter
- p₁: Betriebsparameterwert
- p₂: Betriebsparameterwert
- p₃: Betriebsparameterwert
- p₄: Betriebsparameterwert
- Qᵢₛₜ: Volumenstromistwert
- Qₘᵢₙ: minimaler Volumenstromwert
- R: Verfahrensroutine
- t: Zeit
- t₁: Startzeitpunkt
- t₂: Erfüllungszeitpunkt
- V: Ventilatorkennlinie

## Patentansprüche

1. Verfahren zur Einstellung eines Ventilatorsystems (10) aufweisend eine zentrale Ventilatoreinheit (11), die mit einer Strömungskanalanordnung (13) strömungsverbunden ist, wobei das Verfahren folgende Schritte aufweist:
- Herstellen einer Kommunikationsverbindung (23) zwischen einer Steuerung (18) der zentralen Ventilatoreinheit (11) und einem mobilen Endgerät (21),
- Starten eines Einstellungsablaufs (E) in der Steuerung (18) der zentralen Ventilatoreinheit (11) zu einem Startzeitpunkt (t₁), wobei während dem Einstellungsablaufs (E) wenigstens ein einstellbarer Betriebsparameter (p) der zentralen Ventilatoreinheit (11) kontinuierlich oder stufenweise verändert wird, wobei der Startzeitpunkt (t1) der Steuerung (18) und dem mobilen Endgerät (21) bekannt ist,
- Trennen der Kommunikationsverbindung (23) zwischen der Steuerung (18) der zentralen Ventilatoreinheit (11) und dem mobilen Endgerät (21),
- Messen eines Strömungsistwertes (Qᵢₛₜ) einer Strömung an einer Messstelle (25) der Strömungskanalanordnung (12) mittels eines Sensors (22) und prüfen, ob der Strömungsistwert (Qᵢₛₜ) eine vorgegebene Prüfbedingung erfüllt,
- Speichern eines Erfüllungszeitpunktes (t₂), zu dem der Strömungsistwert (Qᵢₛₜ) die Prüfbedingung erfüllt, in dem mobilen Endgerät (21),
- Ermitteln des einstellbaren Betriebsparameters (p) basierend auf dem Einstellungsablauf (E) und dem Erfüllungszeitpunkt (t₂).

2. Verfahren nach Anspruch 1, wobei der einstellbare Betriebsparameter (p) eine Druckerhöhung ist.

3. Verfahren nach Anspruch 1 oder 2, wobei der Strömungsistwert ein Volumenstromistwert (Qᵢₛₜ) ist und wobei der Vergleichswert ein minimaler Volumenstromwert (Qₘᵢₙ) ist.

4. Verfahren nach einem der vorhergehenden Ansprüche, wobei die Kommunikationsverbindung (23) zwischen dem mobilen Endgerät (21) und der Steuerung (18) drahtlos oder drahtgebunden ist.

5. Verfahren nach einem der vorhergehenden Ansprüche, wobei die Kommunikationsverbindung zwischen dem mobilen Endgerät (21) und der Steuerung (18) eine lokale Kommunikationsverbindung mit begrenzter mittlerer Reichweite ist.

6. Verfahren nach einem der vorhergehenden Ansprüche, wobei sich die Messstelle (25) außerhalb der Kommunikationsreichweite der Kommunikationsverbindung (23) zwischen dem mobilen Endgerät (21) und der Steuerung (18) befindet.

7. Verfahren nach einem der vorhergehenden Ansprüche, wobei die Messstelle (25) an eine Position der Strömungskanalanordnung (12) angeordnet ist, an der der Strömungsistwert (Qᵢₛₜ) ein Minimum aufweist.

8. Verfahren nach einem der vorhergehenden Ansprüche, wobei die Messstelle (15) an eine Position der Strömungskanalanordnung (12) angeordnet ist, die am weitesten von der zentralen Ventilatoreinheit (11) entfernt ist.

9. Verfahren nach einem der vorhergehenden Ansprüche, wobei der an der Messstelle (15) angeordnete Sensor (22) mit dem mobilen Endgerät (21) kommunikationsverbundenen ist und wobei das mobile Endgerät (21) dazu eingerichtet ist, das Erfüllen der Prüfbedingung automatisch zu prüfen.

10. Verfahren nach einem der vorhergehenden Ansprüche, wobei der Einstellungsablauf (E) den Betriebsparameter (p) sequentiell erhöht oder verringert.

11. Verfahren nach einem der vorhergehenden Ansprüche, wobei der Einstellungsablauf (E) mehrere unterschiedliche Betriebsparameterwerte (p₁, p₂, p₃, p₄) des Betriebsparameters (p) definiert, die sequentiell eingestellt werden, wobei jeder Betriebsparameterwert (p₁, p₂, p₃, p₄) während einer vorgegebenen Dauer (Δt) aufrechterhalten wird.

12. Verfahren nach Anspruch 11, wobei die Dauer (Δt) mindestens so groß ist, dass sich die Änderung des Betriebsparameters (p) an der Messstelle (25) auswirkt.

13. Verfahren nach Anspruch 11 oder 12, wobei eine Differenz zwischen zwei unmittelbar benachbarten definierten Betriebsparameterwerten (p₁, p₂, p₃, p₄) eine Änderungsstufe (dp) bildet und alle Änderungsstufen (dp) gleich groß sind.

14. Verfahren nach Anspruch 11 oder 12, wobei eine Differenz zwischen zwei unmittelbar benachbarten definierten Betriebsparameterwerten (p₁, p₂, p₃, p₄) eine Änderungsstufe (dp) bildet, die abhängig von einer Ventilatorkennlinie (V) der zentralen Ventilatoreinheit (11) eingestellt wird.

15. Verfahren nach Anspruch 14, wobei die Änderungsstufen (dp₁₂, dp₂₃, dp₃₄) derart abhängig von der Ventilatorkennlinie (V) eingestellt werden, dass sich die der Strömungsistwert (Qᵢₛₜ) bei jeder Änderungsstufe (dp₁₂, dp₂₃, dp₃₄) um einen Strömungsdifferenzbetrag (ΔQ) ändert.

16. Vorrichtung (15) aufweisend ein mobiles Endgerät (21), einen Sensor (22) zur Erfassung eines Strömungsistwertes (Qᵢₛₜ) und ein Ventilatorsystem (10), wobei das Ventilatorsystem (10) eine zentrale Ventilatoreinheit (11) mit einer Steuerung (18) und eine mit der zentralen Ventilatoreinheit (11) strömungsverbundene Strömungskanalanordnung (12) aufweist, wobei die Vorrichtung (15) dazu eingerichtet ist folgende Schritte durchzuführen:
- Herstellen einer Kommunikationsverbindung (23) zwischen der Steuerung (18) und dem mobilen Endgerät (21),
- Starten eines Einstellungsablaufs (E) in der Steuerung (18) zu einem Startzeitpunkt (t₁), wobei während dem Einstellungsablauf (E) wenigstens ein einstellbarer Betriebsparameter (p) der zentralen Ventilatoreinheit (11) kontinuierlich oder stufenweise verändert wird, wobei der Startzeitpunkt (t1) der Steuerung (18) und dem mobilen Endgerät (21) bekannt ist,
- Trennen der Kommunikationsverbindung (23) zwischen der Steuerung (18) und dem mobilen Endgerät (21),
- Messen eines Strömungsistwertes (Qᵢₛₜ) einer Strömung an einer Messstelle (15) der Strömungskanalanordnung (12) mittels des Sensors (22) und prüfen, ob der Strömungsistwert (Qᵢₛₜ) eine vorgegebene Prüfbedingung erfüllt,
- Speichern eines Erfüllungszeitpunktes (t₂), zu dem der Strömungsistwert (Qᵢₛₜ) die Prüfbedingung erfüllt, in dem mobilen Endgerät (21),
- Ermitteln des einstellbaren Betriebsparameters (p) basierend auf dem Einstellungsablauf (E) und Erfüllungszeitpunkt (t₂).
